# EUROPÄISCHE PATENTANMELDUNG

(11) **EP 4 603 431 A1**
(43) Veröffentlichungstag der Anmeldung: **20.08.2025**
(21) Anmeldenummer: 25153632.2
(22) Anmeldetag: 23.01.2025
(51) Int. Cl.: B65G 49/08, B65G 19/02, B65G 19/26

(54) **FÖRDEREINRICHTUNG ZUM TRANSPORT VERSCHIEBBARER WÄSCHEBÜGEL**

(30) Priorität: 19.02.2024 DE 102024104495
(71) Anmelder: FINTEC Textilpflegesysteme GMBH, 86368 Gersthofen (DE)
(72) Erfinder: Pollauf, Claudia, 86153 Augsburg (DE); Ortolf, Heribert, 86391 Stadtbergen (DE)
(74) Vertreter: Charrier Rapp & Liebau

(57) **Zusammenfassung**

Die Erfindung betrifft eine Fördereinrichtung zum Transport auf einer Tragvorrichtung (1) verschiebbarer Wäschebügel (2), die eine motorisch antreibbare Förderkette (3) und mehrere an der Förderkette (3) über jeweils ein Kettenschloss (8) zwischen einer angehobenen Überfahrstellung und einer abgesenkten Mitnahmestellung schwenkbar angeordnete Mitnehmer (4) enthält. Um eine einfache und kostengünstige Montage und Demontage des Mitnehmers zu ermöglichen, sind die Mitnehmer (4) über jeweils einen zwischen zwei Verbindungsbolzen (13) des jeweiligen Kettenschlosses (8) eingreifenden Lagerzapfen (19) unmittelbar am Kettenschloss (8) schwenkbar gelagert und durch eine Halteeinrichtung (25, 26) gesichert.

## Beschreibung

Die Erfindung betrifft eine Fördereinrichtung zum Transport auf einer Tragvorrichtung verschiebbarer Wäschebügel nach dem Oberbegriff des Anspruchs 1. Die Erfindung betrifft außerdem einen Mitnehmer für eine solche Fördereinrichtung.

Derartige Fördereinrichtungen werden z.B. in gewerblichen Wäschereien für den Transport der auf Wäschebügeln angeordneten Bekleidungstücke zwischen den einzelnen Bearbeitungsstationen eingesetzt. Hierzu enthalten die Fördereinrichtungen üblicherweise eine motorisch antreibbare Förderkette, an der mehrere voneinander beabstandete Mitnehmer für die Mitnahme der auf einer Tragvorrichtung verschiebbaren Wäschebügel befestigt sind.

Aus der DE 10 2014 105 767 A1 ist eine gattungsgemäße Fördereinrichtung bekannt. Diese weist eine motorisch antreibbare Förderkette und mehrere an der Förderkette über jeweils ein Kettenschloss zwischen einer angehobenen Überfahrstellung und einer abgesenkten Mitnahmestellung schwenkbar angeordnete Mitnehmer auf. Die Mitnehmer sind bei dieser bekannten Fördereinrichtung an einem mit dem Kettenschloss verbundenen winkelförmigen Befestigungselement angeordnet und an dem Befestigungselement durch Nieten fixiert. Um die Mitnehmer auszuwechseln, müssen die Nieten zerstört und durch neue ersetzt werden. Dies ist mit einem erblichen Montageaufwand verbunden. Außerdem sind für die Verbindung der Mitnehmer mit der Förderkette die gesondert zu fertigenden, winkelförmigen Befestigungselemente erforderlich. Dies erfordert einen zusätzlichen Fertigungs- und Kostenaufwand.

Die DE 10 2020 123 445 A1 offenbart eine Vorrichtung zum Transport von an Trägern hängenden textilen Gegenständen mit einer Förderstrecke, die mindestens einen Tragstrang, an dem die Träger in Transportrichtung der Förderstrecke entlangbewegbar sind, und wenigstens einen in Transportrichtung antreibbaren Förderstrang aufweist. An dem Förderstrang sind beabstandete Mitnehmer angeordnet, wobei einzelne Mitnehmer gezielt an am Tragstrang in Transportrichtung entlang zu bewegende Träger ankoppelbar sind. Die Mitnehmer weisen Mitnehmerkörper auf, die aus mehreren durch mindestens eine dämpfende Naht verbundene Mitnehmerteile gebildet sind.

Aufgabe der Erfindung ist es, eine Fördereinrichtung der eingangs genannten Art und einen Mitnehmer für eine solche Fördereinrichtung zu schaffen, die eine einfache und kostengünstige Montage und Demontage der Mitnehmer ermöglichen.

Diese Aufgabe wird durch eine Fördereinrichtung mit den Merkmalen des Anspruchs 1 und durch einen Mitnehmer mit den Merkmalen des Anspruchs 9 gelöst. Vorteilhafte Ausgestaltungen der Erfindung sind in den Unteransprüchen angegeben.

Bei der erfindungsgemäßen Fördereinrichtung sind die Mitnehmer über jeweils einen zwischen zwei Verbindungsbolzen des jeweiligen Kettenschlosses eingreifenden Lagerzapfen unmittelbar am Kettenschloss schwenkbar gelagert und durch eine Halteeinrichtung gesichert. Es sind keine aufwändigen Verbindungselemente zwischen der Förderkette und den Mitnehmern erforderlich. Die Verbindung kann durch einfache und handelsübliche Verbindungselemente erfolgen und herstellerspezifische Zusatzteile können entfallen. Dadurch kann die Montage und Demontage der Mitnehmer erheblich vereinfacht werden.

Gemäß einer zweckmäßigen Ausführung kann die Halteeinrichtung ein die Verbindungsbolzen des Kettenschlosses überdeckendes Haltelement und eine mit dem Mitnehmer verbindbares Befestigungselement umfassen. In einer kostengünstigen Ausführung kann das Haltelement als die Verbindungsbolzen des Kettenschlosses überdeckende Scheibe und das Befestigungselement als mit dem Mitnehmer verbindbare Schraube ausgebildet sein. Diese Teile sind kostengünstig und einfach verfügbar. Das die Verbindungsbolzen des Kettenschlosses überdeckende Halteelement kann aber auch eine auf die Seitenwand der Mitnehmers aufsetzbare Abdeckplatte sein. Außerdem kann der Mitnehmer auch aus zwei miteinander verbindbaren Formhälften bestehen.

In besonders vorteilhafter Weise ist die Förderkette als Simplex- oder Einfachkette mit oberen und unteren Außenlaschen, oberen und unteren Innenlaschen, Bolzen und zwischen den Innenlaschen angeordneten Hülsen ausgeführt. Die Verbindungsbolzen der Kettenschlösser sind vorzugsweise derart ausgestaltet, dass sie in der Einbaustellung des Kettenschlosses gegenüber den unteren Innenlaschen der Förderkette um eine Länge vorstehen, die größer als die Höhe der Hülsen der Förderkette ist. Dies kann auf einfache und kostengünstige Weise dadurch erreicht werden, dass die Förderkette als Simplex- oder Einfachkette und die Kettenschlösser als Duplex-Kettenschlösser ausgebildet sind.

Das Kettenschloss weist zweckmäßigerweise eine Verbindungslasche zur festen Halterung der beiden Verbindungsbolzen, eine an den unteren Enden der Verbindungsbolzen über eine Haltefeder gehaltene untere Haltelasche und eine zwischen der Verbindungslasche und der unteren Haltelasche angeordnete obere Haltelasche auf. Der Lagerzapfen des Mitnehmers ist vorzugsweise zwischen der unteren Haltelasche und der oberen Haltelasche des Kettenschlosses angeordnet.

Die Erfindung betrifft außerdem einen Mitnehmer für die vorstehend beschriebene Fördereinrichtung. Der Mitnehmer weist an seiner einen Seite eine Ausnehmung für den Eingriff mit dem Wäschebügel und an seiner anderen Seite einen Lagerzapfen für den Eingriff zwischen die beiden Verbindungsbolzen eines Kettenschlosses auf.

Der zwischen die Verbindungsbolzen des Kettenschlosses eingreifende Lagerzapfen des Mitnehmers ist zweckmäßigerweise oval ausgeführt. Dadurch kann eine gute Führung des Mitnehmers zwischen den Verbindungsbolzen des Kettenschlosses sowohl in der vertikalen als auch der horizontalen Richtung erreicht werden. Der Lagerzapfen kann aber auch rund sein oder eine andere geeignete Form aufweisen.

Der Lagerzapfen des Mitnehmers kann zweckmäßigerweise in einer Vertiefung in einer Seitenwand des Mitnehmers angeordnet sein. An der Unterseite der Vertiefung kann ein Durchbruch vorgesehen sein. Dieser Durchbruch kann an seiner Oberseite gegeneinander abgewinkelte Anschlagflächen enthalten. Dadurch kann eine Hubbegrenzung des Mitnehmers erreicht werden.

Zwischen der Ausnehmung und dem Lagerzapfen kann an dem Mitnehmer außerdem mindestens eine Öffnung zur Aufnahme eines Gewichts vorgesehen sein. Über ein in die Öffnung eingesetztes Gewicht kann der Mitnehmer in die nach unten geklappte Mitnahmestellung beaufschlagt werden. Der Mitnehmer kann aber auch über eine Feder oder ein anderes Rückstellelement in die nach unten geklappte Mitnahmestellung gedrückt werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur** 1: eine Fördereinrichtung mit einer Förderkette und Mitnehmern in einer Aufnahmestellung;
- **Figur** 2: eine Fördereinrichtung mit einer Förderkette und Mitnehmern in einer Transportstellung;
- **Figur** 3: eine vergrößerte Ansicht eines Mitnehmers in einer Vorderansicht;
- **Figur** 4: eine vergrößerte Ansicht eines Mitnehmers in einer Rückansicht und
- **Figur** 5: einen Mitnehmer der in Figur 1 zum Teil gezeigten Fördereinrichtung in einer Explosionsdarstellung.

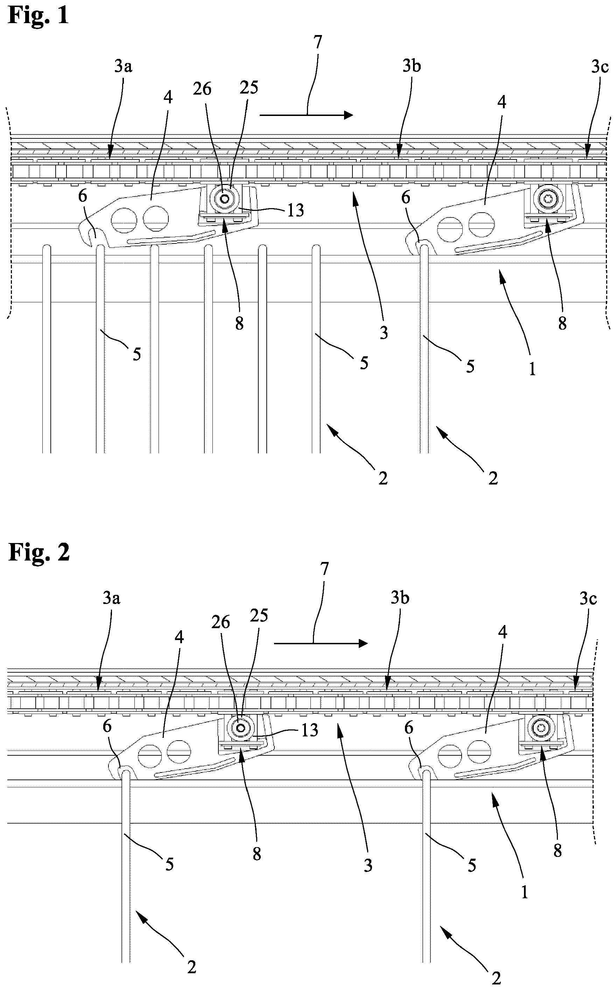

In den Figuren 1 und 2 ist ein Teil einer Fördereinrichtung zum Transport auf einer Tragvorrichtung 1 verschiebbarer Wäschebügel 2 mit einer motorisch antreibbaren Förderkette 3 und mehreren an der Förderkette 3 angeordneten Mitnehmern 4 in unterschiedlichen Stellungen gezeigt. Eine derartige Fördereinrichtung wird z.B. in gewerblichen Wäschereien für den Transport der auf den Wäschebügeln 2 angeordneten Bekleidungstücke zwischen den einzelnen Bearbeitungsstationen eingesetzt. Die Tragvorrichtung 1 ist bei der gezeigten Ausführung ein schienenförmiges Tragprofil, auf dem die Wäschebügel 2 mit den daran gehaltenen Bekleidungsstücken verschiebbar geführt sind. Die Wäschebügel 2 enthalten üblicherweise klappbare Bügelarme und einen Bügelhaken 5, über den Wäschebügel 2 auf der Tragvorrichtung 1 angeordnet sind.

Die an der Förderkette 3 angeordneten und durch diese bewegbaren Mitnehmer 4 weisen eine schlitzförmige Ausnehmung 6 zum Eingriff mit den Bügelhaken 5 auf und sind an der über der Tragvorrichtung 1 angeordneten Förderkette 3 zwischen einer in Figur 1 links gezeigten angehobenen Überfahrstellung und einer in Figur 1 rechts gezeigten abgesenkten Mitnahmestellung verschwenkbar. Die Mitnehmer 4 sind derart ausgestaltet, dass sie bei einer Bewegung in einer Transportrichtung 7 gemäß Figur 1 über mehrere eng nebeneinander angeordnete Bügelhaken 5 in der angehobenen Überfahrstellung gleiten und erst am letzten Bügelhaken 5 in die abgesenkte Mitnahmestellung zum Eingriff mit dem Bügelhaken 5 kommen, um so gezielt den letzten Wäschebügel 2 einer Reihe nebeneinander angeordneter Wäschebügel 2 aufnehmen und weitertransportieren zu können.

Wie aus den Figuren 1 und 2 hervorgeht, enthält die Förderkette 3 mehrere voneinander beabstandete Kettenschlösser 8, durch die aus mehreren Kettengliedern bestehenden Kettenabschnitte 3a, 3b, 3c usw. zu einer umlaufenden und durch einen Motor angetriebenen Förderkette 3 miteinander verbunden sind. An den Kettenschlössern 8 sind die Mitnehmer 4 befestigt. Durch den gewünschten Abstand zwischen den Mitnehmern 4 wird die Länge der Kettenanschnitte 3a, 3b, 3c usw. vorgegeben.

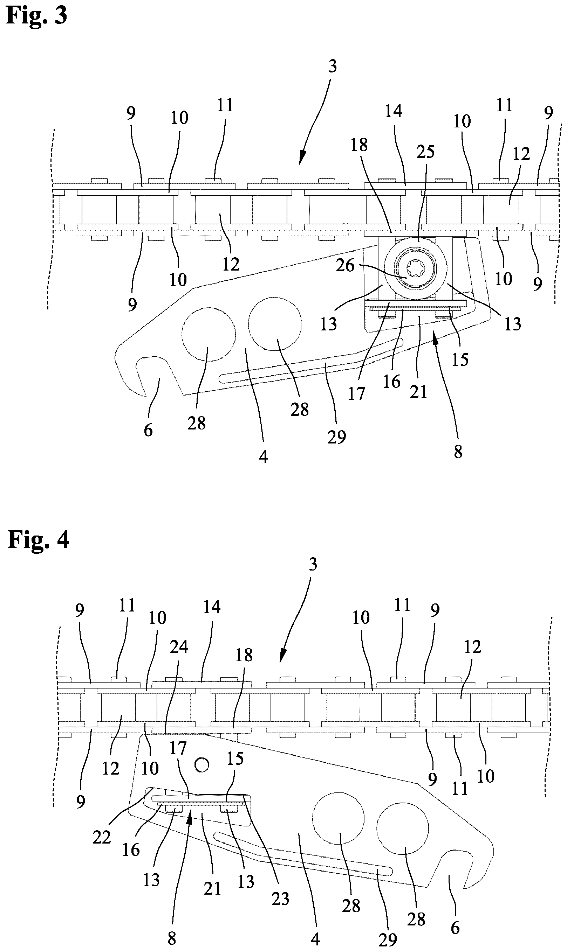

In den Figuren 3 bis 5 ist besonders gut erkennbar, dass die Förderkette 3 als sogenannte Simplex- oder Einfach-Rollenkette mit oberen und unteren Außenlaschen 9, oberen und unteren Innenlaschen 10, Bolzen 11 und zwischen den Innenlaschen 10 angeordneten Hülsen 12 ausgeführt ist. Die Kettenschlösser 8 enthalten zwei voneinander beabstandete Verbindungsbolzen 13, die mit ihren einen Ende fest an einer Verbindungslasche 14 angeordnet sind. Die Verbindungsbolzen 13 sind derart ausgestaltet, dass sie in der Einbaustellung des Kettenschlosses 8 gegenüber den unteren Innenlaschen 10 der Förderkette 3 um eine Länge vorstehen, die größer als die Höhe der Hülsen 12 der Förderkette 3 ist. Das kann auf besonders zweckmäßige Weise durch Verwendung eines handelsüblichen Duplex-Kettenschlosses erreicht werden. Durch Einsatz eines Duplex-Kettenschlosses an einer Simplex- oder Einfach-Rollenkette stehen die Verbindungsbolzen 13 des Kettenschlosses 8 mit der geforderten Länge gegenüber den unteren Innenlaschen 10 vor.

Die Verbindungsbolzen 13 weisen an ihren freien unteren Enden eine umlaufende Ringnut 15 auf, in die in an sich bekannter Weise eine Haltefeder 16 zur Halterung einer unteren Haltelasche 17 eingreift. Zwischen der Verbindungslasche 14 und der unteren Haltelasche 17 ist auf den Verbindungsbolzen 13 eine obere Haltelasche 18 als Ersatz für die untere Außenlasche 9 angeordnet.

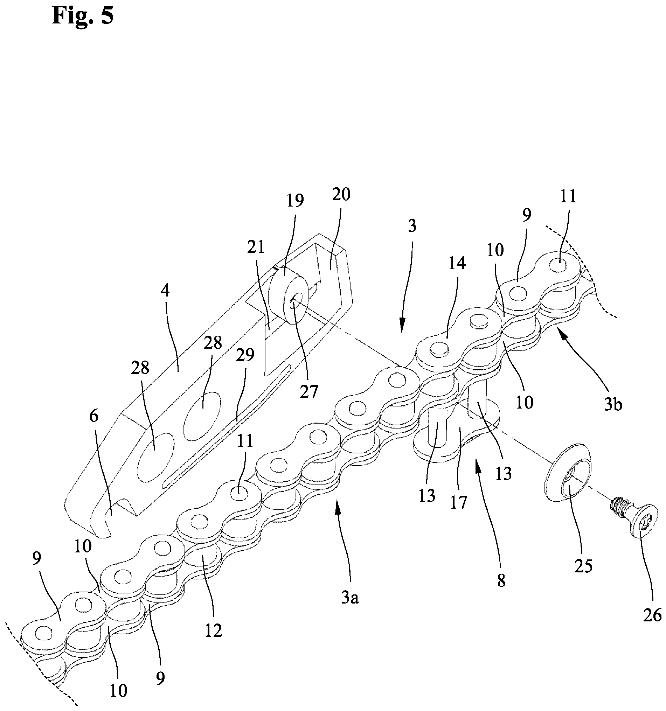

In Figur 5 ist erkennbar, dass der Mitnehmer 4 an seinem einen Ende die als nach außen offener Schlitz ausgebildete Ausnehmung 6 für den Eingriff mit dem Bügelhaken 5 und an seinem anderen Ende einen Lagerzapfen 19 zum Eingriff zwischen die nach unten vorstehenden Verbindungsbolzen 13 des Kettenschlosses 8 enthält. Bei der gezeigten Ausführung ist der hier oval ausgebildete Lagerzapfen 19 in einer im wesentlichen rechteckigen Vertiefung 20 in der Seitenwand des Mitnehmers 4 angeordnet. Über den zwischen die beiden Verbindungsbolzen 13 des Kettenschlosses 8 eingreifenden Lagerzapfen 19 ist der Mitnehmer 4 auch ohne separate Verbindungsteile schwenkbar an der Förderkette 3 angelenkt. Im Bereich der Vertiefung 20 enthält der Mitnehmer 4 außerdem einen in den Figuren 3 und 4 erkennbaren Durchbruch 21, in den die untere Haltelasche 16 ragt.

Wie aus Figur 4 hervorgeht, weist der Durchbruch 21 an seiner Oberseite gegeneinander abgewinkelte erste und zweite Anschlagflächen 22 und 23 für die Anlage der unteren Haltelasche 17 in der hochgeklappten Überfahrstellung und der nach unten geklappten Mitnahmestellung auf. Dadurch wird eine Hubbegrenzung des Mitnehmers 4 sowohl nach oben als auch nach unten ermöglicht. In der nach unten geklappten Mitnahmestellung liegt der Mitnehmer 4 außerdem mit einer schrägen oberen Anlagefläche 24 an der oberen Haltelasche 18 des Kettenschlosses 8 an.

Zur Halterung des Mitnehmers 4 zwischen den beiden Verbindungsbolzen 13 dient ein hier als Senkscheibe ausgebildetes Halteelement 25, welches die beiden nach unten vorstehenden Teile der Verbindungsbolzen 13 des Kettenschlosses 8 von der Außenseite übergreift und über ein hier als Senkkopfschraube ausgebildetes Befestigungselement 26 an dem Lagerzapfen 19 befestigt ist. Der Lagerzapfen 19 weist hierzu eine entsprechende Bohrung 27 auf. Durch das Halteelement 25 und das Befestigungselement 26 wird eine Halteeinrichtung zur Sicherung des Mitnehmers 4 an der Förderkette 3 gebildet. Über das scheibenförmige Halteelement 25 und das hier als Schraube ausgeführte Befestigungselement 26 kann der Mitnehmer 4 auf besonders einfache Weise auch ohne aufwändige Befestigungsmittel an der Förderkette 3 befestigt und bei Bedarf auch einfach ausgewechselt werden. Zur Demontage des Mitnehmers 4 muss lediglich das Befestigungselement gelöst werden. Bei den hier als Senkscheibe ausgebildeten Halteelement 25 und der als Senkkopfschraube ausgebildeten Befestigungselement 26 handelt es sich um im Handel frei verfügbare und kostengünstige Standardteile, wodurch die Konstruktion einfach aufgebaut ist und eine schnelle Montage und Demontage der Mitnehmer 4 ermöglicht.

Wie besonders aus den Figuren 3 bis 5 hervorgeht, weisen die Mitnehmer 4 zwischen der schlitzförmigen Ausnehmung 6 und dem Lagerzapfen 19 mehrere hier kreisrunde Öffnungen 28 zur Aufnahme von Gewichten auf. Über die in die Öffnungen 28 eingesetzten Gewichte kann der Mitnehmer 4 in die nach unten geklappte Mitnahmestellung beaufschlagt werden. Der Mitnehmer 4 kann aber auch über eine Feder oder ein anderes Rückstellelement in die nach unten geklappte Mitnahmestellung gedrückt werden. Außerdem ist an der Unterseite des Mitnehmers 4 ein länglicher Schlitz 29 angeordnet. Dadurch können Stöße gedämpft werden, wenn der Mitnehmer 4 mehrere eng aneinander liegende Bügelhaken 5 überfährt.

### Bezugszeichenliste

- 1: Tragvorrichtung
- 2: Wäschebügel
- 3: Förderkette
- 3a,b,c: Kettenabschnitte
- 4: Mitnehmer
- 5: Bügelhaken
- 6: Ausnehmung
- 7: Transportrichtung
- 8: Kettenschloss
- 9: Außenlasche
- 10: Innenlasche
- 11: Bolzen
- 12: Hülse
- 13: Verbindungsbolzen
- 14: Verbindungslasche
- 15: Ringnut
- 16: Haltefeder
- 17: Untere Haltelasche
- 18: Obere Haltelasche
- 19: Lagerzapfen
- 20: Vertiefung
- 21: Durchbruch
- 22: Erste Anschlagfläche
- 23: Zweite Anschlagfläche
- 24: Anlagefläche
- 25: Halteelement
- 26: Befestigungselement
- 27: Bohrung
- 28: Öffnung
- 29: Schlitz

## Patentansprüche

1. Fördereinrichtung zum Transport auf einer Tragvorrichtung (1) verschiebbarer Wäschebügel (2), die eine motorisch antreibbare Förderkette (3) und mehrere an der Förderkette (3) über jeweils ein Kettenschloss (8) zwischen einer angehobenen Überfahrstellung und einer abgesenkten Mitnahmestellung schwenkbar angeordnete Mitnehmer (4) enthält, **dadurch gekennzeichnet, dass** die Mitnehmer (4) über jeweils einen zwischen zwei Verbindungsbolzen (13) des jeweiligen Kettenschlosses (8) eingreifenden Lagerzapfen (19) unmittelbar am Kettenschloss (8) schwenkbar gelagert und durch eine Halteeinrichtung (25, 26) gesichert sind.

2. Fördereinrichtung nach Anspruch 1, **dadurch gekennzeichnet, dass** die Halteeinrichtung (25, 26) ein die Verbindungsbolzen (13) des Kettenschlosses (8) überdeckendes Haltelement (25) und eine mit dem Mitnehmer (4) verbindbares Befestigungselement (26) umfasst.

3. Fördereinrichtung nach Anspruch 2, **dadurch gekennzeichnet, dass** das Haltelement (25) als die Verbindungsbolzen (13) des Kettenschlosses (8) überdeckende Scheibe und das Befestigungselement (26) als mit dem Mitnehmer (4) verbindbare Schraube ausgebildet ist.

4. Fördereinrichtung nach einem der Ansprüche 1 bis 3, **dadurch gekennzeichnet, dass** die Förderkette (3) als Simplex- oder Einfachkette mit oberen und unteren Außenlaschen (9), oberen und unteren Innenlaschen (10), Bolzen (11) und zwischen den Innenlaschen (10) angeordneten Hülsen (12) ausgeführt ist.

5. Fördereinrichtung nach Anspruch 4, **dadurch gekennzeichnet, dass** die Verbindungsbolzen (13) des Kettenschlosses (8) derart ausgestaltet sind, dass sie in der Einbaustellung des Kettenschlosses (8) gegenüber den unteren Innenlaschen (10) der Förderkette (3) um eine Länge vorstehen, die größer als die Höhe der Hülsen (12) der Förderkette (3) ist.

6. Fördereinrichtung nach einem der Ansprüche 1 bis 5, **dadurch gekennzeichnet, dass** die Förderkette (3) als Simplex- oder Einfachkette und das Kettenschloss (8) als Duplex-Kettenschloss ausgebildet sind.

7. Fördereinrichtung nach einem der Ansprüche 1 bis 6, **dadurch gekennzeichnet, dass** das Kettenschloss (8) eine Verbindungslasche (14) zur festen Halterung der beiden Verbindungsbolzen (13), eine an den unteren Enden der Verbindungsbolzen (13) über eine Haltefeder (16) gehaltene untere Haltelasche (17) und eine zwischen der Verbindungslasche (14) und der unteren Haltelasche (17) angeordnete obere Haltelasche (18) enthält.

8. Fördereinrichtung nach Anspruch 7, **dadurch gekennzeichnet, dass** der Lagerzapfen (19) des Mitnehmers (4) zwischen der unteren Haltelasche (17) und der oberen Haltelasche (18) des Kettenschlosses (8) angeordnet ist.

9. Mitnehmer (4) für eine Fördereinrichtung zum Transport auf einer Tragvorrichtung (1) verschiebbarer Wäschebügel (2) nach einem der Ansprüche 1 bis 8, **dadurch gekennzeichnet, dass** der Mitnehmer (4) an seinem einen Ende eine Ausnehmung (6) für den Eingriff mit dem Wäschebügel (2) und an seinem anderen Ende einen Lagerzapfen (19) für den en Eingriff zwischen die beiden Verbindungsbolzen (13) eines Kettenschlosses (8) enthält.

10. Mitnehmer (4) nach Anspruch 9, **dadurch gekennzeichnet, dass** der Lagerzapfen (19) oval ausgebildet ist.

11. Mitnehmer (4) nach Anspruch 9 oder 10, **dadurch gekennzeichnet, dass** der Lagerzapfen (19) in einer Vertiefung (20) in einer Seitenwand des Mitnehmers (4) angeordnet ist.

12. Mitnehmer (4) nach Anspruch 11, **dadurch gekennzeichnet, dass** an der Unterseite der Vertiefung (20) ein Durchbruch (21) vorgesehen ist.

13. Mitnehmer (4) nach Anspruch 12, **dadurch gekennzeichnet, dass** der Durchbruch (21) an seiner Oberseite gegeneinander abgewinkelte Anschlagflächen (22, 23) enthält.

14. Mitnehmer (4) nach einem der Ansprüche 9 bis 13, **dadurch gekennzeichnet, dass** zwischen der Ausnehmung (6) und dem Lagerzapfen (19) mindestens eine Öffnung (28) zur Aufnahme eines Gewichts vorgesehen ist.
